# EUROPÄISCHE PATENTSCHRIFT

(11) **EP 1 905 550 B1**
(45) Veröffentlichungstag und Bekanntmachung des Hinweises auf die Patenterteilung: **31.03.2010**
(21) Anmeldenummer: 07018765.3
(22) Anmeldetag: 25.09.2007
(51) Int. Cl.: B25J 15/02

(54) **Greifvorrichtung mit ebenem Schraubgetriebe**
Gripper device with flat skew type gears
Dispositif de prise doté d'un engrenage hélicoïdal plat

(30) Priorität: 26.09.2006 DE 102006045784
(43) Veröffentlichungstag der Anmeldung: 02.04.2008
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 3 836 439
- DE-A1- 19 939 932
- US-A- 5 163 729
- US-A- 5 342 254

## Beschreibung

Die Erfindung betrifft eine Greifvorrichtung mit mindestens zwei in oder an einem Gehäuse geführten Schlitten, wobei jeder Schlitten ein Greifelement trägt und jeweils mit einer Zahnstange gekoppelt ist, die Teil eines die Schlitten im Gehäuse synchronisierenden Getriebes sind, wobei das synchronisierende Getriebe Teil eines elektrischen Antriebs ist.

Eine solche Vorrichtung ist aus der US-A-5 342 254 bekannt. Sie ist am Roboterarm angeordnet. Beide Greifelemente sind bereichsweise als Zahnstangen ausgebildet. Die Zahnstangen werden elektromotorisch über ein Differentialgetriebe angetrieben. Dabei liegt zwischen den beiden Differentialgetriebeausgängen und den Zahnstangen jeweils ein Stirnrad als winkel- oder wegmessendes Zwischenrad.

Aus dem Katalog "Sommer Automatic" der Sommer-automatic GmbH & Co.KG, Seite 99, aus dem Jahr 2003 ist eine Greifvorrichtung bekannt, die zwei Schlitten aufweist, die jeweils einzeln mittels pneumatischer Zylinder-Kolben-Einheiten angetrieben werden. Eine Lageregelung ist hier nicht möglich.

Der vorliegenden Erfindung liegt die Problemstellung zugrunde, eine Greifvorrichtung mit geringer Masse zu entwickeln, bei der die die Greifelemente tragenden Schlitten stabil geregelt, sicher und energiesparend bewegt werden.

Diese Problemstellung wird mit den Merkmalen des Hauptanspruches gelöst. Dazu kämmt jede Zahnstange mit einem Schraubrad. Die Schraubräder sind über ein Getriebe gekoppelt.

Mit dieser Greifvorrichtung kann man weg- und/oder kraftgeregelt ein Werkstück handhaben, also ergreifen, halten und freigeben. Da bei dieser Vorrichtung die letzte den Schlitten antreibende Getriebestufe ein selbsthemmendes Schraubgetriebe ist, wird die Greifkraft gehalten ohne dass permanente, den Antrieb überhitzende Regelausschläge notwendig sind.

Beispielsweise ist das Schraubgetriebe ein ebenes Lineargetriebe, bei dem pro Schlitten ein schneckenartiges Schraubrad eine schrägverzahnte Zahnstange antreibt.

Weitere Einzelheiten der Erfindung ergeben sich aus den Unteransprüchen und der nachfolgenden Beschreibung einer schematisch dargestellten Ausführungsform.
- Figur 1:: Dimetrische Darstellung einer elektrisch angetriebenen Greifvorrichtung;
- Figur 2:: Mittiger Vertikallängsschnitt zu Figur 1;
- Figur 3:: Horizontalschnitt zu Figur 1 auf der Höhe der Schraubräder;
- Figur 4:: Querschnitt zu Figur 1 auf der Höhe des ersten Getriebezugs des Vorgelegegetriebes;
- Figur 5:: Querschnitt zu Figur 1 auf der Höhe des zweiten Getriebezugs des Vorgelegegetriebes;
- Figur 6:: Querschnitt zu Figur 1 auf der Höhe des Synchronisiergetriebes;
- Figur 7:: Querschnitt zu Figur 1 auf der Höhe der Schraubradverzahnun

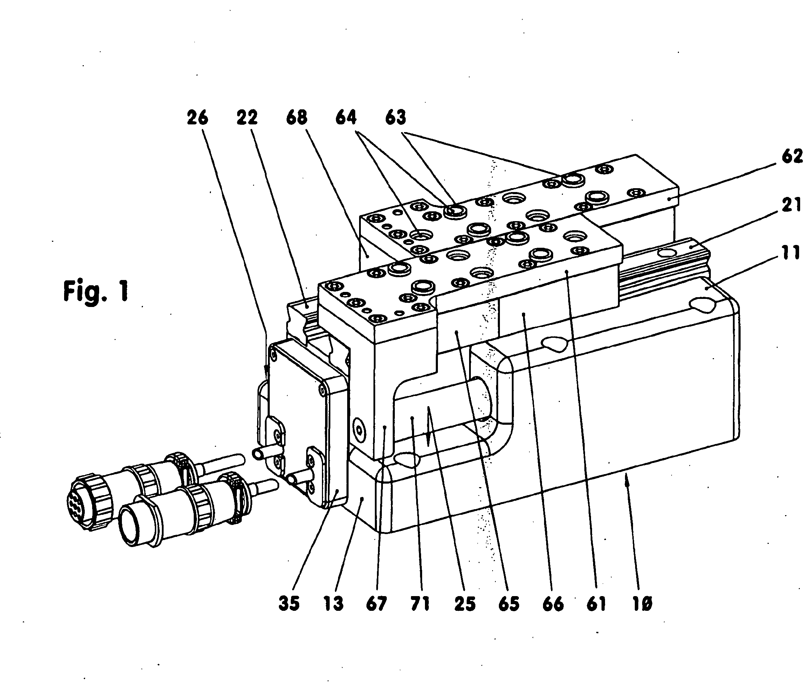

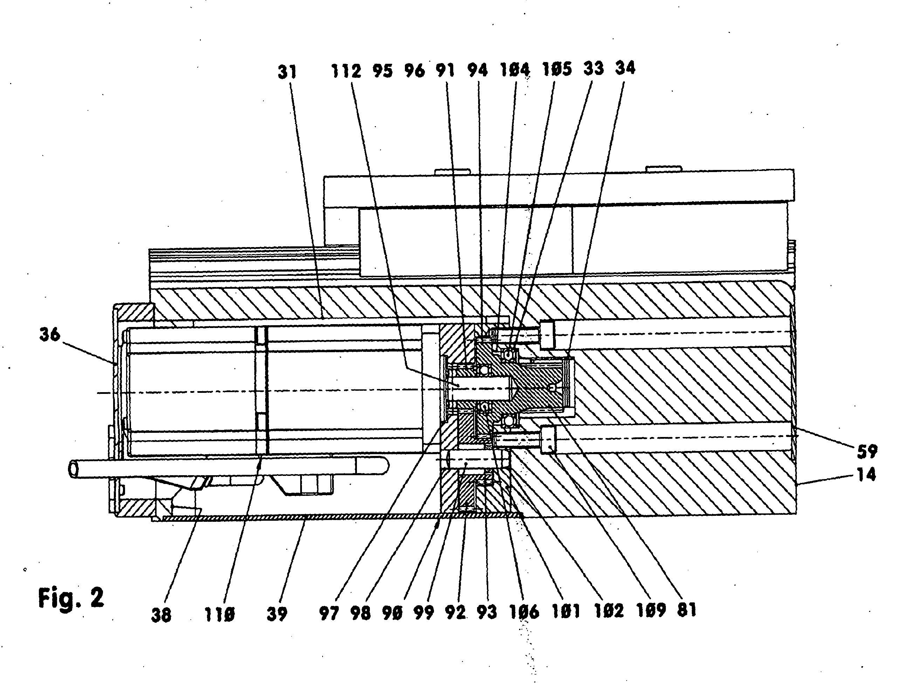

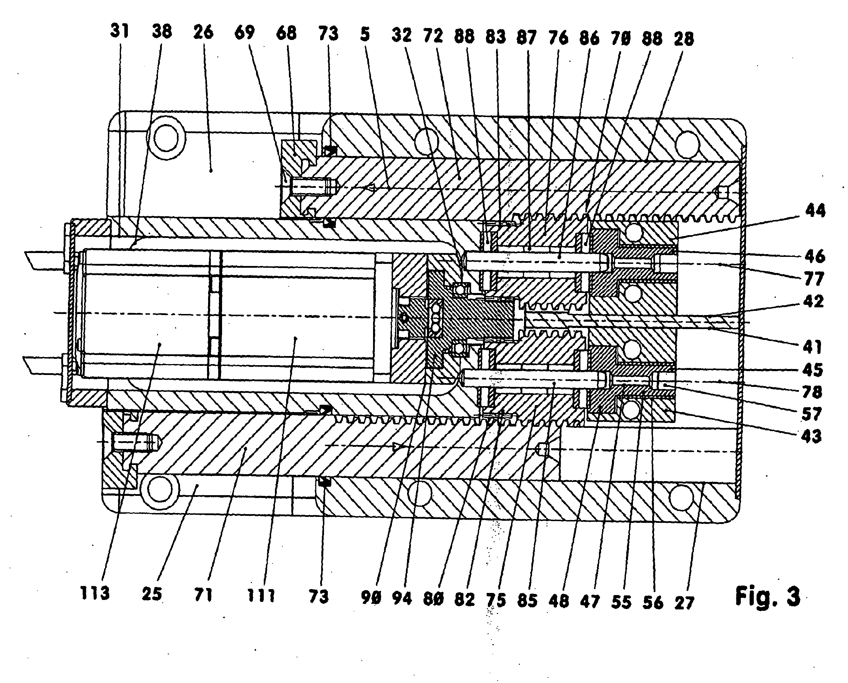

Die Figur 1 zeigt einen elektromotorisch angetriebenen Parallelgreifer mit zwei für das Aufnehmen von - hier nicht dargestellten - Greifelementen ausgestatteten Schlitten (61, 62). Die die Schlitten (61, 62) tragenden Führungsschienen (21, 22) sind außen an einem Gehäuse (10) befestigt. Der Antriebmotor (111) und die Getriebe (70, 80, 90) sind im Gehäuse (10) gelagert, vgl. Figuren 2 und 3.

Der Motor (111) treibt ein zweistufiges Vorgelegegetriebe (90) an, dessen Abtriebsrad (94) des zweiten Getriebezugs an das zentrale Rad (81) eines dreirädrigen Synchronisiergetriebes (80) gekoppelt ist. Die vom Rad (81) angetriebenen zwei Abtriebsräder (82, 83) des Synchronisiergetriebes (80) sind starr mit den jeweiligen Schraubrädern (75, 76) der die Schlitten (61, 62) antreibenden Schraubgetriebe (70) verbunden.

Das beispielsweise einteilige Gehäuse (10) ist ein im Wesentlichen quaderförmiger, z.B. aus einer Aluminiumlegierung hergestellter Körper. Die Abmessungen des Gehäuses (10) betragen beim Ausführungsbeispiel, in Millimetern: 220 x 130 x 75. Das Gehäuse (10) hat an seiner Oberseite (11) z.B. zwei Nuten (23) zur Lagerung von Führungsschienen (21, 22). Diese Nuten (23) verlaufen parallel zu den längeren Körperkanten des Gehäuses (10). Die Länge der Führungsschienen (21, 22) entspricht der Länge des Gehäuses (10).

Das Gehäuse (10) hat an seiner Vorderseite (13) in den oberen Eckbereichen jeweils einen Gehäuseabsatz (25, 26), dessen Länge z.B. 34% der Gehäuselänge und dessen Höhe z.B. 56% der Gehäusehöhe beträgt. Die einzelne Absatzbreite entspricht jeweils ca. 26% der Gesamtgehäusebreite. In jedem Gehäuseabsatz (25, 26) endet eine Durchgangsbohrung (27, 28), in der jeweils z.B. gleitgelagert eine Zahnstange (71, 72) geführt ist.

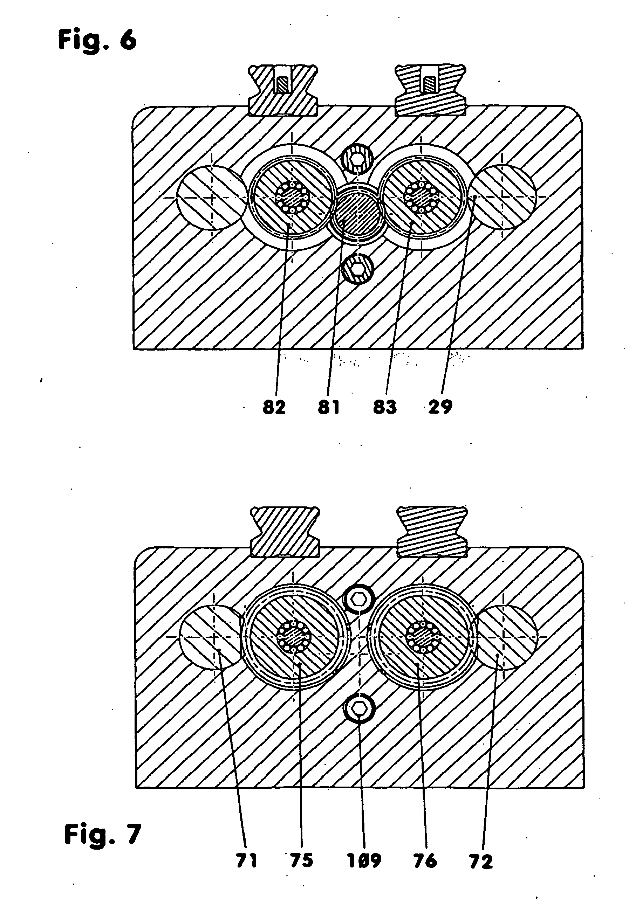

Der mittlere Gehäusebereich der Vorderseite (13) hat eine zentrale Stufenbohrung (31) zur Aufnahme des Elektromotors (111) und eines Vorgelegegetriebes (90). Am Boden (32) der ersten Stufe ist die Kombination aus Motor (111) und Vorgelegegetriebe (90) mit zwei Schrauben (109) befestigt, vgl. Figuren 2 und 7. An der Rückseite des Motors (111) ist ein Tachogenerator (113) angeordnet. Der Tachogenerator (113) liefert Signale für eine Lageregelung der Greifvorrichtung.

Ein Abtriebsrad (94) des Vorgelegegetriebes (90) stützt sich in einem mittleren Stufenabschnitt (33) ab. An diesem mittleren Stufenabschnitt (33) schließt sich ein hinterer Stufenabschnitt (34) an, in den das Abtriebsrad (94) des Vorgelegegetriebes (90) hineinragt. Das Gehäuse (10) ist an seiner Vorderseite (13) durch eine im Wesentlichen rechteckige Motorschachtverlängerung (35) verlängert. Letztere ist mit einem Motorschachtdeckel (36) verschlossen. Aus dem Motorschachtdeckel (36) werden im Ausführungsbeispiel die Kabel zum Antrieb und zur Steuerung des Motors (111) herausgeführt, vgl. Figur 1.

Die Stufenbohrung (31) wird von der Unterseite (12) des Gehäuses (10) aus von einer rechteckigen vertikal orientierten Gehäuseausnehmung (38) geschnitten. Die Gehäuseausnehmung (38) hat eine Breite, die dem Innendurchmesser der ersten Stufe der Stufenbohrung (31) entspricht. Sie beginnt am Boden (32) und erstreckt sich auf ca. 95% der Länge dieser Stufe. Die Gehäuseausnehmung (38) ist durch einen Bodendeckel (39) verschlossen.

Von der Rückseite (14) aus sind in das Gehäuse (10) zwei parallele, gestufte Sacklochbohrungen (41, 42) eingearbeitet. Beide Sacklochbohrungen (41, 42) dienen u.a. der Aufnahme der Schraubräder (75, 76) des Synchronisiergetriebes (80). Die Mittellinien dieser Sacklochbohrungen (41, 42) und die Mittellinien der Durchgangsbohrungen (27, 28) liegen parallel zueinander in einer Horizontalebene (29), vgl. Figur 6. Die Mittellinie der Stufenbohrung (31) liegt um ca. 7% unterhalb dieser Horizontalebene (29).

Die Sacklochbohrungen (41, 42) treffen im mittleren Gehäusebereich auf den hinteren Stufenabschnitt (34) der zentralen Stufenbohrung (31). Die Überdeckung der Bohrungen (31, 41, 42) ist größer als die Länge der Verzahnungsbreite der Stirnräder (81-83) des Synchronisiergetriebes (80). Die Sacklochbohrungen (41, 42) sind mit einem hinteren Getriebedeckel (59) verschlossen.

Das Vorgelegegetriebe (90) umfasst u.a. vier Stirnräder (91-94) und zwei Getriebeplatten (95, 101), vgl. Figuren 2 bis 5, wobei jede Getriebeplatte (95, 101) einen Getriebezug aufnimmt. Der erste Getriebezug besteht aus einem Antriebsrad (91) und einem Abtriebsrad (92). Die Übersetzung beträgt z.B. 1 : 2,1 ins Langsame. Das Antriebsrad (91) sitzt über eine kraftschlüssige Wellen-Naben-Verbindung auf der Motorwelle (112). Die erste Stufenbohrung (96) der ersten Getriebeplatte (95) weist eine Motorzentrierung (97) auf. Die zweite Stufenbohrung (98) der Getriebeplatte (95) trägt die das Abtriebsrad (92) lagernde Achse (99) und umgibt zugleich das Abtriebsrad (92). Letzteres sitzt nadelgelagert auf der Achse (99). Die Getriebeplatte (95) ist mit dem Stirnflansch des Motors (111) verschraubt.

Die zweite Getriebeplatte (101), die die gleichen Außenabmessungen wie die erste (95) hat, lagert das Antriebsrad (93) und das Abtriebsrad (94) des zweiten Getriebezugs. Dieser Getriebezug hat z.B. die gleiche Übersetzung ins Langsame wie der erste Getriebezug. Das Abtriebsrad (92) des ersten Getriebezugs und das Antriebsrad (93) des zweiten Getriebezugs sind z.B. aus einem Teil gefertigt.
Auch hier sitzt das Antriebsrad (93) in einer Stufenbohrung (102), von der ein Bereich die Achse (99) lagert. In der zweiten Stufenbohrung (104) sitzt kugelgelagert das Abtriebsrad (94). Ein Rillenkugellager (105) zentriert gleichzeitig die zweite Getriebeplatte (101) gegenüber dem Gehäuse (10), vgl. Figur 2.

Das Abtriebsrad (94) sitzt ferner bauraumsparend über ein weiteres Wälzlager, z.B. ein Rillenkugellager (106), auf der Motorwelle (112).

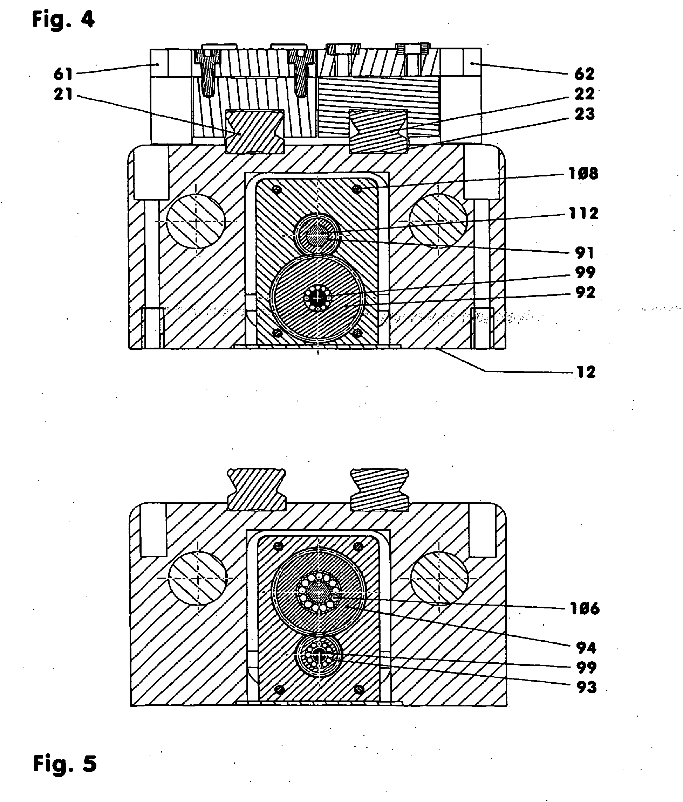

Beide Getriebeplatten (95, 101) sind über die Schrauben (108), vgl. Figur 4, miteinander verbunden.

Das Vorgelegegetriebe (90) treibt das Synchronisiergetriebe (80) an, vgl. auch Figur 6. Das Antriebsrad (81) des Synchronisiergetriebes (80) kämmt mit den beiden Abtriebsrädern (82, 83). Das Übersetzungsverhältnis beträgt z.B. 1 : 1,66 in Langsame. Das Antriebsrad (81) ist einteilig mit dem Abtriebsrad (94) des Vorgelegegetriebes (90) verbunden, vgl. Figur 3. Die Abtriebsräder (82, 83) des Synchronisiergetriebes (80) sind jeweils Teil der Schraubräder (75, 76) des ebenen Schraubgetriebes (70). Das einzelne Schraubrad (75, 76) ist eine beispielsweise einzahnige, zylindrische Schnecke.

Die einzelne Kombination aus Abtriebsrad (82, 83) und Schraubrad (75, 76) ist jeweils dreifach nadelgelagert: eine Radiallagerung und zwei Axiallagerungen. Die Schraubräder (75, 76) lagern radial jeweils über Nadeln (87) auf den Achsen (85, 86). Im Bereich der Stirnseiten der Schraubräder (75, 76) sind komplette Axialnadellager (88) angeordnet. Zur sicheren Abstützung der im Gehäuse (10) in den Sacklochbohrungen (41, 42) steckenden Achsen (85, 86), sitzen in den Bohrungen (41, 42) jeweils Lagerböcke (43, 44). In den über Passschrauben am Gehäuse (10) befestigten Lagerböcken (43, 44) sind Einstellschrauben (45, 46) gelagert. Letztere haben Mittellinien, die mit den Mittellinien der Bohrungen (41, 42) deckungsgleich sind.

Die einzelne Einstellschraube (45, 46) hat einen Kopf (48) und einen Schaft (55). Sie hat eine gestufte Durchgangsbohrung (47). Im Kopf (48) weitet sich die Durchgangsbohrung (47) zur Lagerung der Achse (85, 86) entsprechend auf. Um die Durchgangsbohrung (47) herum befindet sich im Kopf (48) eine zylindrische Einsenkung, in der jeweils eine der Axiallagerschalen der Axialnagellager (88) eingebettet ist. Der Schaft (55) weist an seiner Außenkontur ein Einstellgewinde (56) auf. Im dortigen Bereich der Durchgangsbohrung (47) ist ein Innensechskantprofil (57) eingearbeitet. Über den Innensechskant kann die jeweilige Einstellschraube (45, 46) zur Einstellung des Lagerspiels der Schraubräder (75, 76) verstellt werden. Die Einstellschrauben (45, 46) haben gegenüber den Lagerböcken (43, 44) oder gegenüber dem Gehäuse (10) hier nicht dargestellte Verdrehsicherungen.

Jedes Schraubrad (75, 76) kämmt mit einer Zahnstange (71, 72). Letztere hat eine im Wesentlichen zylindrische Kontur, die gleitgelagert in der Durchgangsbohrung (27, 28) gelagert ist. Die einzelne Zahnstange (71, 72) hat im Ausführungsbeispiel eine reine Schrägverzahnung, deren Schrägungswinkel dem Mittensteigungswinkel des jeweiligen Schraubrades (75, 76) entspricht. Die Zahnflanken der Paarung haben pro Flankenberührung jeweils nur eine Punktberührung. Die vorhandene Längsgleitbewegung der Zahnflanken erfordert hier verschleißfeste Werkstoffe oder gehärtete Bauteile. Im Ausführungsbeispiel sind daher die Bauteile (71, 72) und (75, 76) jeweils aus einem Nitrierstahl 31CrMoV9 gefertigt und entsprechend oberflächengehärtet.

Die Schrägverzahnung der Zahnstangen (71, 72) hat u.a. den Vorteil, dass bei seinem Einbau in das Gehäuse (10) die Mittellinie der Schraubräder (75, 76) nicht präzise in der Mittelebene der Verzahnung liegen muss.

Im hinteren Bereich ist die Zahnstange (71, 72) auf z.B. 50% ihrer Gesamtlänge schrägverzahnt. Das vordere Ende der Zahnstange (71, 72) ist über ein Koppelelement (67, 68) starr mit einem auf einer entsprechenden Führungsschiene (21, 22) gelagerten Schlitten (61, 62) gekoppelt, vgl. Figur 1. Das untere Ende des Koppelelements (67, 68) umgreift formschlüssig das vordere Ende der entsprechenden Zahnstange (71, 72), vgl. Figur 3. Zusätzlich hält eine Senkschraube (69) die Verbindung spielfrei.

Nach den Figuren 1 und 3 befindet sich der vordere Schlitten (61) in einer vorderen und der hintere (62) in einer hinteren Position. Nach Figur 3 kämmt demnach die Zahnstange (71) mit ihrem hinteren Ende mit dem entsprechenden Schraubrad (75), während die Zahnstange (72) über ihr vorderes Verzahnungsende mit dem Schraubrad (76) in Eingriff steht.

Durch ein Betätigen des Motors (111) wechseln die Schlitten (61, 62) bei voller Hubausnutzung ihre Position. Nach Figur 3 fährt die Zahnstange (71) nach rechts und die Zahnstange (72) synchronisiert nach links. Bei diesen Bewegungen verlassen jeweils nur die Zahnstangenbereiche das Gehäuse (10), die eine zylindrische Außenkontur aufweisen. Zur Abdichtung gegenüber der jeweiligen Zahnstange (71, 72) kann daher jeweils ein Radialwellendichtring (73) verwendet werden. Auf diese Weise können der gesamte Motor- und Getriebebereich u.a. gegen das Eindringen von Schmutz, Staub, Spänen oder Spritzwasser abgedichtet werden.

Die auf der Gehäuseoberseite (11) sitzenden Führungsschienen (21, 22) tragen jeweils einen Schlitten (61, 62). An jedem Schlitten (61, 62) sind zwei Kugelumlaufschuhe (65, 66) hintereinander befestigt. Die Kugelumlaufschuhe (65, 66,) führen die Schlitten (61, 62) reibungsarm an den Führungsschienen (21, 22). Nach Figur 1 sitzen vor den Kugelumlaufschuhen (65, 66) an dem einzelnen Schlitten (61, 62) jeweils ein Koppelelement (67, 68).

An der Schlittenoberseite, vgl. Figur 1, trägt jeder Schlitten (61, 62) mehrere Zentrierhülsen (63) und Befestigungsbohrungen (64). Die Befestigungsbohrungen (64) haben unterhalb der die Zentrierhülsen (63) positionierenden Zylindersenkungen z.B. jeweils Innengewinde. Auf den Zentrierhülsen (63) werden - hier nicht dargestellte - Greifelemente aufgesetzt und jeweils mittels Schrauben in den entsprechenden Befestigungsbohrungen (64) verankert. Selbstverständlich können die Greifelemente auch an die jeweiligen Schlitten (61, 62) angeformt sein.

Nach der Montage des Motors (111), der Getriebe (70, 80, 90) und der Schlitten (61, 62) werden die Verzahnungen mit Fett geschmiert und abschließend die Deckel (36, 39, 59) auf der Vorder- (13), Rück- (14) und Unterseite (12) des Gehäuses (10) abdichtend befestigt.

### Bezugszeichenliste:

- 5: Hubrichtung

- 10: Gehäuse
- 11: Oberseite
- 12: Unterseite
- 13: Vorderseite, Stirnseite
- 14: Rückseite, Stirnseite

- 21, 22: Führungsschienen, Führungen
- 23: Befestigungsnuten
- 25, 26: Gehäuseabsatz
- 27, 28: Durchgangsbohrungen
- 29: Horizontalebene

- 31: Stufenbohrung
- 32: Boden
- 33: Stufenabschnitt, Mitte
- 34: Stufenabschnitt, hinten
- 35: Motorschachtverlängerung, rechteckig
- 36: Motorschachtdeckel

- 38: Gehäuseausnehmung, vertikal
- 39: Bodendeckel

- 41, 42: Sacklochbohrungen
- 43, 44: Lagerböcke
- 45, 46: Einstellschrauben
- 47: Durchgangsbohrung
- 48: Kopf
- 55: Schaft
- 56: Einstellgewinde
- 57: Innensechskant
- 59: Getriebedeckel, hinten

- 61, 62: Schlitten, vorn, hinten
- 63: Zentrierhülsen
- 64: Befestigungsbohrungen
- 65, 66: Kugelumlaufschuhe
- 67, 68: Koppelelemente
- 69: Senkschraube

- 70: Schraubgetriebe
- 71, 72: Zahnstangen
- 73: Radialwellendichtringe
- 75: Schraubrad, links
- 76: Schraubrad, rechts
- 77, 78: Rotationsachsen

- 80: Synchronisiergetriebe
- 81: Antriebsrad
- 82: Abtriebsrad, links
- 83: Abtriebsrad, rechts
- 85, 86: Achsen
- 87: Nadeln
- 88: Axialnadellager

- 90: Vorgelegegetriebe
- 91: Antriebsrad, erster Getriebezug
- 92: Abtriebsrad, erster Getriebezug

- 93: Antriebsrad, zweiter Getriebezug
- 94: Abtriebsrad, zweiter Getriebezug

- 95: erste Getriebeplatte
- 96: erste Stufenbohrung
- 97: Motorzentrierung
- 98: zweite Stufenbohrung
- 99: Achse

- 101: zweite Getriebeplatte
- 102: erste Stufenbohrung
- 104: zweite Stufenbohrung
- 105: Rillenkugellager
- 106: Rillenkugellager

- 108: Schrauben zur Verbindung von (95) und (101)
- 109: Schrauben für Antriebsbefestigung

- 110: Antrieb
- 111: Elektromotor
- 112: Motorwelle
- 113: Tachogenerator

## Patentansprüche

1. Greifvorrichtung mit mindestens zwei in oder an einem Gehäuse (10) geführten Schlitten (61, 62), wobei jeder Schlitten (61, 62) ein Greifelement trägt und jeweils mit einer Zahnstange (71, 72) gekoppelt ist, die Teil eines die Schlitten (61, 62) im Gehäuse (10) synchronisierenden Getriebes (80) sind, wobei das synchronisierende Getriebe (80) Teil eines elektrischen Antriebes (110) ist,
**dadurch gekennzeichnet,**
- **dass** jede Zahnstange (71, 72) mit einem Schraubrad (75, 76) kämmt und
- **dass** die Schraubräder (75, 76) über das Getriebe (80) gekoppelt sind.

2. Greifvorrichtung gemäß Anspruch 1, **dadurch gekennzeichnet, dass** die Schlitten (61, 62) und ihre Führungen (21, 22) außen am Gehäuse (10) angeordnet sind.

3. Greifvorrichtung gemäß Anspruch 1, **dadurch gekennzeichnet, dass** die Zahnstangen (71, 72) jeweils über einzelne Koppelelemente (67, 68) mit den jeweiligen Schlitten (61, 62) starr verbunden sind.

4. Greifvorrichtung gemäß Anspruch 2, **dadurch gekennzeichnet, dass** die Rotationsachsen (77, 78) der Schraubräder (75, 76) parallel zur Hubrichtung (5) der Zahnstangen (71, 72) orientiert sind.

5. Greifvorrichtung gemäß Anspruch 2, **dadurch gekennzeichnet, dass** das die Schraubräder (75, 76) koppelnde Getriebe (80) als ebenes Rädergetriebe angebildet ist, das aus drei geradverzahnten Stirnrädern (81-83) besteht.

6. Greifvorrichtung gemäß Anspruch 5, **dadurch gekennzeichnet, dass** je ein Stirnrad (82, 83) des Getriebes (80) jeweils mit einem Schraubrad (75, 76) starr gekoppelt ist.

7. Greifvorrichtung gemäß Anspruch 1, **dadurch gekennzeichnet, dass** der Antrieb (110) einen Elektromotor (111) und ein Vorgelegegetriebe (90) umfasst.

8. Greifvorrichtung gemäß Anspruch 7, **dadurch gekennzeichnet, dass** das Synchronisiergetriebe (80) ein Antriebsrad (81) hat, das Teil (94) des Vorgelegegetriebes (90) ist.

9. Greifvorrichtung gemäß Anspruch 7, **dadurch gekennzeichnet, dass** das Vorgelegegetriebe (90) einen zweistufigen Getriebezug umfasst.

10. Greifvorrichtung gemäß Anspruch 7, **dadurch gekennzeichnet, dass** auf der Welle (112) des Elektromotors (111) das antreibende Rad (91) des ersten Getriebezuges drehstarr sitzt, während das abtreibende Rad (94) des zweiten Getriebezuges dort (112) wälzgelagert gelagert ist.

11. Greifvorrichtung gemäß Anspruch 1, **dadurch gekennzeichnet, dass** das Gehäuse (10) den verzahnten Bereich der Zahnstangen(71, 72) - über den gesamten Schlittenhub - abdichtend umgibt.

## Claims

1. A gripping device with at least two slides (61, 62) that are guided either inside or along a case (10), whereby each said slide (61, 62) carries a gripping element and is coupled to a rack (71, 72), whereby said gripping device belongs to a gear (80) that synchronizes said slides (61, 62) inside said case (10), and said synchronizing gear (80) is part of an electric drive unit (110),
wherein
- Each rack (71, 72) is meshed in a spiral-toothed gear wheel (75, 76) and
- Said spiral-toothed gear wheels (75, 76) are coupled through said gear (80).

2. Gripping device of claim 1, wherein said slides (61, 62) and their guides (21, 22) are mounted on the outside of said case (10).

3. Gripping device of claim 1, wherein said racks (71, 72) are each stiffly connected to their respective slide (61, 62) by individual coupling elements (67, 68).

4. Gripping device of claim2, wherein the rotation axes (77, 78) of said spiral-toothed gear wheels (75, 76) have a parallel orientation to the travel direction (5) of said racks (71, 72).

5. Gripping device of claim 2, wherein said synchronizing gear (80) connecting said spiral-toothed gear wheels (75, 76) is made of a flat gear comprised of three spur wheels (81-83).

6. Gripping device of claim 5, wherein said spur wheels (82, 83) of said synchronizing gear (80) are each stiffly connected with a spiral-toothed gear wheel (75, 76).

7. Gripping device of claim1, wherein said drive unit (110) is comprised of an electric motor (111) and of a gear reducer unit (90).

8. Gripping device of claim7, wherein said synchronizing gear (80) has a driving wheel (81) that is a part (94) of said gear reducer unit (90).

9. Gripping device of claim7, wherein said gear reducer unit (90) is comprised of two sets of gear teeth.

10. Gripping device of claim7, wherein the driving wheel (91) of said first set of gear teeth is stiffly affixed on the shaft (112) of said electric motor (111), whereas the output wheel (94) of the second set of gear teeth is disposed there (112) on roller bearings.

11. Gripping device of claim 1, wherein said case (10) encompasses and seals off the toothed section of said racks (71, 72) on the whole length of slide travel.

## Revendications

1. Dispositif de préhension qui a au moins deux coulisseaux (61, 62) guidés, à l'intérieur ou sur un carter (10), chaque coulisseau (61, 62) portant un élément de préhension et étant couplé à une crémaillère (71, 72), et qui fait partie d'un organe de synchronisation (80) desdits coulisseaux (61, 62) dans ledit carter (10), l'organe de synchronisation (80) appartenant à un entraînement électrique (110),
**caractérisé en ce que**
- chaque crémaillère (71, 72) s'engrène dans une roue hélicoïdale (75, 76) et que
- lesdites roues hélicoïdales (75, 76) sont accouplées par le biais de l'organe de synchronisation (80).

2. Dispositif de préhension selon la revendication 1, **caractérisé en ce que** les coulisseaux (61, 62) et leurs guides (21, 22) sont placés à l'extérieur et sur le carter (10).

3. Dispositif de préhension selon la revendication 1, **caractérisé en ce que** les crémaillères (71, 72) sont chacune connectées de manière rigide au coulisseau correspondant (61, 62) par le biais de différents éléments d'accouplement (67, 68) .

4. Dispositif de préhension selon la revendication 2, **caractérisé en ce que** les axes de rotation (77, 78) des roues hélicoïdales (75, 76) sont orientés parallèlement au sens de déplacement (5) des crémaillères (71, 72).

5. Dispositif de préhension selon la revendication 2, **caractérisé en ce que** l'organe de synchronisation (80) des roues hélicoïdales (75, 76) est constitué d'un engrenage plat comprenant trois roues droites (81-83).

6. Dispositif de préhension selon la revendication 5, **caractérisé en ce que** chaque roue droite (82, 83) de l'organe de synchronisation (80) est connectée de manière rigide à une roue hélicoïdale (75, 76).

7. Dispositif de préhension selon la revendication 1,
**caractérisé en ce que** l'entraînement (110) comprend un moteur électrique (111) et une transmission intermédiaire (90).

8. Dispositif de préhension selon la revendication 7,
**caractérisé en ce que** l'organe de synchronisation (80) possède une roue menante (81) qui fait partie (94) de la transmission intermédiaire (90).

9. Dispositif de préhension selon la revendication 7, **caractérisé en ce que** la transmission intermédiaire (90) comprend un train d'engrenage à deux étages.

10. Dispositif de préhension selon la revendication 7, **caractérisé en ce que** la roue menante (91) du premier étage du train d'engrenage montée sur l'arbre (112) du moteur électrique (111) est rigide en rotation tandis que la roue de sortie (94) du second étage y est logée (112) sur un palier à roulement.

11. Dispositif de préhension selon la revendication 1, **caractérisé en ce que** le carter (10) entoure hermétiquement la partie dentée des crémaillères (71, 72) sur toute la course des coulisseaux.
